# EUROPEAN PATENT APPLICATION

(11) **EP 4 400 486 A1**
(43) Date of publication of application: **17.07.2024**
(21) Application number: 23217885.5
(22) Date of filing: 19.12.2023
(51) Int. Cl.: C04B 35/622, C04B 35/628, C04B 35/626

(54) **CONVERSION OF CARBON FIBER TOWS TO METAL CARBIDE FIBER TOWS**

(30) Priority: 12.01.2023 US 202318153871
(71) Applicant: Honeywell International Inc., Charlotte, NC 28202 (US)
(72) Inventor: MEHR, Mehrad, Charlotte, 28202 (US); JADIDIAN, Bahram, Charlotte, 28202 (US)
(74) Representative: Haseltine Lake Kempner LLP

(57) **Abstract**

The disclosure describes vacuum processing of a fiber tow. The disclosure describes generating a metal carbide fiber tow by applying metal to a carbon fiber tow and vacuum processing the carbon fiber tow to convert at least a portion of the carbon fiber tow to a metal carbide fiber tow. The vacuum system is heated to at least about 1400°C.

## Description

### TECHNICAL FIELD

The disclosure relates to vacuum processing of fibers.

### BACKGROUND

Ceramic fibers may be embedded in a matrix to create a ceramic matrix composite (CMC). CMCs may be used in high temperature applications. For example, CMC components may be used as friction materials for commercial and military aircraft, or in refractory applications. Next generation ceramic fibers, such as metal carbide fibers, may be desirable for improved material properties, such as increased temperature resistance and/or increased oxidation resistance. However, these ceramic fibers may be difficult and expensive to make, limiting the applications where they may be employed.

### SUMMARY

In some examples, the disclosure is directed to a technique for generating a fiber tow comprising metal carbide. Generating the fiber tow comprising metal carbide includes applying metal to a carbon fiber tow. The technique also includes vacuum processing the carbon fiber tow to convert at least a portion of the carbon fiber tow to metal carbide.

In some examples, the disclosure is directed to a system for generating a fiber tow comprising metal carbide. The system includes a metal application system configured to apply metal to a carbon fiber tow. The system also includes a vacuum processing system configured to convert at least a portion of a carbon fiber tow to a metal carbide.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a schematic diagram illustrating an example system for generating a metal carbide fiber tow according to some examples of the present disclosure.
FIG. 2 is a schematic cross-sectional diagram illustrating a portion of the fiber tow of FIG. 1 covered in a layer of sealant material according to some examples of the present disclosure.
FIG. 3 is a schematic cross-sectional diagram illustrating a portion of the example carbon fiber tow of FIG. 1 partially converted to metal carbide.
FIG. 4 is a schematic cross-sectional diagram illustrating a portion of the example carbon fiber tow of FIG. 1 completely converted to metal carbide.
FIG. 5 is a flowchart illustrating an example technique for generating a metal carbide fiber tow according to some examples of the present disclosure.
FIGS. 6A and 6B illustrate an example metal carbide fiber tow generated by vacuum processing techniques according to the present disclosure.

### DETAILED DESCRIPTION

The disclosure describes systems and techniques for generating metal carbide fiber tows. Carbon fiber tows, for example, may be coated or converted (e.g., chemically reacted) to form metal carbide coated carbon fiber tows or metal carbide fiber tows. Metal carbide fiber tows, such as silicon carbide fiber tows, may have one or more desirable properties relative to carbon fibers (e.g., increased strength, increased oxidation resistance, or the like). The disclosed techniques and systems for generating metal carbide fiber tows may advantageously allow for these fiber tows to be used in more applications because they may be made more economically.

The disclosure describes vacuum processing of carbon fiber tows to generate a fiber tow that comprises or consists of metal carbide. The vacuum process may be a batch process or a continuous process. In a batch process, a discrete number and length of carbon fiber tows are treated (e.g., by a chemical vapor infiltration (CVI) process, a chemical vapor deposition (CVD) process, a slurry deposition process, or the like) under vacuum. The carbon fiber tows may be any suitable carbon fiber tows arranged in any suitable arrangement. For example, tows of fibers may be arranged in a linear, radial, or chordal arrangement. The carbon fiber tows may be relatively short, chopped and/or entangled fibers. In some examples, the carbon fiber tows may be wrapped around mandrels or bobbins in a spool. Alternatively, as will be described below, the fiber tow may be a continuous carbon fiber tow that is continuously vacuum processed to at least partially convert the carbon fiber tow to a reacted fiber tow that includes metal carbide.

In some examples, vacuum processing of carbon fiber tows according to the present disclosure may include passing a carbon fiber tow through a plurality of vacuum chambers that are arranged in series. In some examples, each vacuum chamber of the plurality of vacuum chambers may be outfitted with a corresponding vacuum pump of a plurality of vacuum pumps. The plurality of vacuum chambers may be configured to step down (e.g., reduce) the pressure at each successive vacuum chamber, until a portion of the carbon fiber tow passes into a central vacuum chamber.

The central vacuum chamber may, in some examples, consist of or include a objective chamber configured to coat or convert the portion of the fiber tow inside the central vacuum chamber. The operating pressure in the central vacuum chamber may be the lowest pressure (i.e., highest vacuum level) of the plurality of vacuum chambers. Although described herein as a central vacuum chamber, the central vacuum chamber need not be precisely the middle vacuum chamber of the plurality of chambers. Upon reaching the central vacuum chamber, the fiber tow may be coated or converted (e.g., partially converted or completely converted) to a fiber tow that includes metal carbide.

Next, the fiber tow may pass through a second set of vacuum chambers configured to step up (e.g., increase) the pressure at each successive vacuum chamber until the fiber tow exits the vacuum system. In this way, a carbon fiber tow may be continuously processed under vacuum because the pressure in the central vacuum chamber may be maintained below an acceptable threshold level for the conversion to metal carbide by the plurality of vacuum chambers on either side of the central vacuum chamber. Advantageously, the plurality of vacuum chambers may substantially prevent or minimize entry of an atmosphere external to the vacuum system from reaching the central vacuum chamber. Thus, even though continuous vacuum processing of a fiber tow may involve passing the fiber tow through an inlet to the vacuum system and an outlet of the vacuum system, the plurality of vacuum chambers, arranged both before and after the central vacuum chamber, may provide for an acceptable vacuum level for vacuum processing in the central vacuum chamber.

Although described primarily herein as a single carbon fiber tow, other numbers of carbon fiber tows are considered suitable for use in systems and techniques described herein. For example, two, three, four, or more discrete carbon fiber tows may be vacuum processed simultaneously. Although described below primarily as a carbon fiber being vacuum processed to convert to a metal carbide fiber, other materials are considered for the disclosed vacuum processing systems and techniques. Other fibers suitable for vacuum processing treatment by CVI, CVD or other processes may also be treated in the disclosed systems.

As mentioned above, in some examples of the present disclosure, carbon fiber tows may be treated to generate fiber tows including metal carbide. Surprisingly, in some examples, the carbon fiber tow may be completely converted to a metal carbide fiber tow, such as a silicon carbide fiber tow. Stated similarly, the fiber tow resulting from vacuum processing according to the present disclosure may consist of or consist essentially of metal carbide. This result may be surprising because complete conversion of a carbon fiber tow to a metal carbide fiber tow may be performed at a pressure level in the central vacuum chamber of less than about 500 millitorr.

Metal carbide fiber tows may have desirable properties over carbon fiber tows, for example in aerospace applications, such as ultra-high temperature (e.g., greater than 1500 degrees Celsius (°C)) applications. However, metal carbide fiber tows have found only limited use since processes used to generate the fiber tows have limited the applications where it is cost-effective to use metal carbide fiber tows. For example, one way to make metal carbide fiber tows such as silicon carbide fiber tows involves pre-ceramic polymers which have complex and long processing cycles. Using vacuum processing systems and techniques disclosed herein may allow for the proliferation of these desirable materials because the continuous vacuum processing techniques may be cost-effective in more applications

Although described herein primarily with respect to silicon as the metal in the metal carbide fiber tow, other suitable metals may be used, such as titanium, tungsten, or some other such metal.

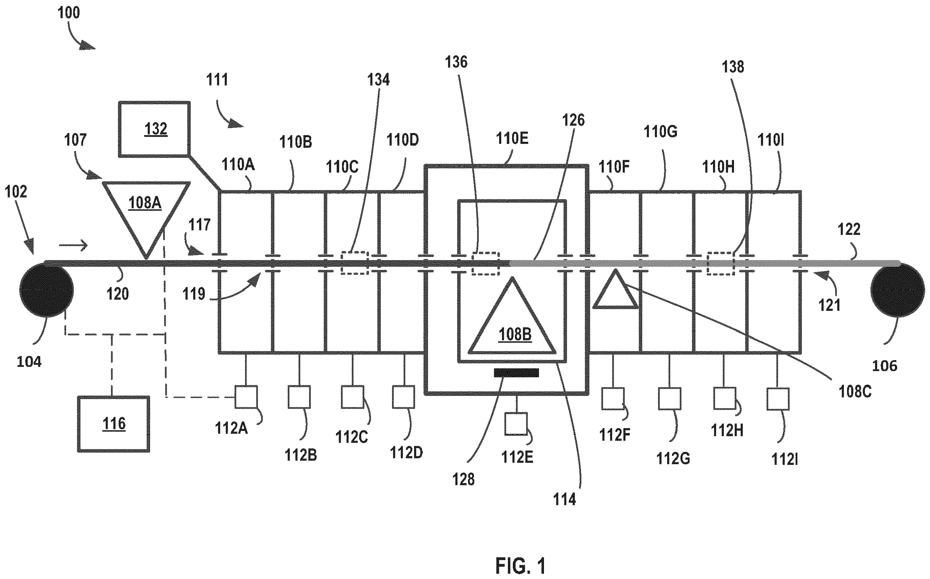

FIG. 1 is a schematic diagram illustrating an example system 100 for continuous vacuum processing of a fiber tow 120. System 100 includes fiber system 102, sealing system 107, vacuum system 111, and controller 116.

Fiber system 102 is configured to pass carbon fiber tow 120 through vacuum system 111. Although illustrated as a single carbon fiber tow 120, fiber system 102 may be configured to pass multiple carbon fiber tows, and may include multiples of any of the elements of fiber system 102. Fiber system 102 includes starter core 104 and winding core 106. Starter core 104 and/or winding core 106 may be coupled to a tensioner (not shown), for example, an electric motor or a braking system configured to provide a selected tension on fiber tow 120 as core 104 is rotated to pass fiber tow 120 through vacuum system 111. Fiber system 102 may additionally or alternatively include one or more tensioning rollers (e.g., nip rollers, idlers, adjustable and/or translatable idlers, web steering rollers and the like) configured to provide a selected tension on fiber tow 120 (or a web material or removable backing material onto which fiber tow 120 is disposed) as starter core 104 is rotated to pass fiber tow 120 through vacuum system 111 (along the direction of the arrow in FIG. 1). In some examples, the selected tension may affect a density of carbon fiber tow 120, e.g., a fiber volume and/or density relative to a total volume and/or density of fiber tow 120. In examples where metal carbide fiber tows are generated by a batch process, fiber system 102 may be omitted from system 100, and carbon fiber tow may be loaded directly into vacuum system 100 before vacuum system 100 is closed.

Fiber system 102 may be selectively controlled to control the feed rate of carbon fiber tow 120 through vacuum system 111, such that the dwell time of carbon fiber tow 120 in vacuum system 111 may be controlled. In this way, a thickness of a coating of sealing material applied by sealing system 107, or an infiltration distance of material applied by sealing system 107 (e.g., a metal material such as a material including silicon) by controlling a length of dwell time in one or more vacuum chambers of vacuum system 111.

System 100 includes vacuum system 111. In the illustrated example, vacuum system 111 is configured to continuously vacuum process fiber tow 120 and includes a plurality of vacuum chambers. In alternative examples, where carbon fiber tow 120 is to be batch vacuum processed, vacuum system 111 may include a single vacuum chamber.

Vacuum system 111 includes plurality of vacuum chambers 110A, 110B, 110C, 110D, 110E, 110F, 110G, 110H, and 110I (collectively "vacuum chambers 110"). Vacuum system 111 also includes one or more vacuum pumps configured to evacuate vacuum chambers 110. In some examples, vacuum system 111 may include a plurality of vacuum pumps 112A, 112B, 112C, 112D, 112E, 112F, 112G, 112H, and 112I (collectively "vacuum pumps 112") As such, vacuum system 111 may include a corresponding vacuum pump 112A for each vacuum chamber 110A of the plurality of vacuum chambers 110. Although illustrated as defining a substantially rectangular cross-sectional area, vacuum chamber may take on any other suitable shape. For example, vacuum chambers 110 may be sections of tube surrounding fiber tow 120. Advantageously, tube-shaped vacuum chambers 110 may substantially reduce the volume that must be evacuated by vacuum pumps 112.

Vacuum chambers 110 may be arranged in series, such that fiber tow 120 is configured to pass through first inlet 117 into first vacuum chamber 110A, through first vacuum chamber outlet 119 and into second vacuum chamber 110B, and so on until fiber tow 120 passes out of last vacuum chamber 110I through outlet 121. Several vacuum chamber inlets and outlets are not specifically called out by reference numerals in FIG. 1 for clarity. Inlet 117 and outlet 119 may be defined in a wall of vacuum chamber 110A, as shown. In some examples, as illustrated, first vacuum chamber 110A and second vacuum chamber 110B may share a wall, such that first vacuum chamber outlet 119 also defines an inlet to second vacuum chamber 119B. However, in some examples each vacuum chamber 110A-110I may be a separate, discrete chamber with its own inlet and outlet connected with a tube.

The aperture in the wall of 110A may be defined to reduce leakage of the atmosphere exterior to vacuum system 111 into vacuum system 111. For example, a diameter of inlet 117 and/or outlet 119 may be similar to a diameter of carbon fiber tow 120, such that there is a tight tolerance or contact between carbon fiber tow 120 and inlet 117, outlet 119, or both, so that leakage is reduced. Additionally, or alternatively, inlet 117 and/or outlet 119 may extend along a length of carbon fiber tow 120, and may in some examples define a tortuous path along the length of carbon fiber tow 120, which may further reduce leakage. Additionally, or alternatively, system 100 may include sealing system 107, which may be configured to reduce leakage of atmosphere into vacuum system 111 by applying a layer of sealing material to carbon fiber tow 120, as will be further described below.

Although the illustrated example of FIG. 1 includes nine different vacuum chambers 110, any suitable number of vacuum chambers may be included in the plurality of vacuum chambers, for example a single vacuum chamber, or at least three vacuum chambers, or at least five vacuum chambers. In some examples, vacuum system 111 may include up to 20 vacuum chambers 110. Furthermore, although central vacuum chamber 110E is illustrated as being in the middle of the series of vacuum chambers 110 such that fiber tow 120 is configured to pass through four chambers before entering central vacuum chamber 110E and four chambers after exiting central vacuum chamber 110E, central vacuum chamber 110E need not be located exactly in the middle of vacuum system 111. For example, more vacuum chambers 110 may be disposed before central vacuum chamber 110E, or more vacuum chambers 110 may be disposed after central vacuum chamber 110E.

At least two vacuum chambers 110A, 110B of vacuum chambers 110 may be configured to operate at a different level of vacuum pressure from each other during vacuum processing of fiber tow 120. For example, first set of vacuum chambers 110A-110D may be configured to step down (e.g., reduce) a pressure from an atmospheric pressure (e.g., about 760 torr) outside of vacuum system to an operating pressure for a vacuum processing operation inside central vacuum chamber 110E. For example, central vacuum chamber 110E may be configured to operate at less than, for example, about 500 millitorr, or about 250 millitorr.

To achieve this level of vacuum in central vacuum chamber 110E, first vacuum chamber 110A may be configured to operate at about 50 torr, second vacuum chamber 110B may be configured to operate at about 25 torr, third vacuum chamber 110C may be configured to operate at about 10 torr, and fourth vacuum chamber 110D may be configured to operate at about 1 torr. It should be understood that these numbers are merely exemplary and not intended to be limiting. It should also be understood that as used herein, the term "about" to describe a value includes values within plus or minus 10% of the stated value.

Since the pressure may be reduced over the first set of vacuum chambers 110A-110D, some minimal level of leakage resulting from the passage of carbon fiber tow 120 from the exterior atmosphere into first vacuum chamber 110A may be acceptable, because the successive chambers 110B-110D may be configured to further reduce pressure. In some examples, vacuum pumps 112 may be similar to each other. Advantageously, vacuum pumps 112 may be standard vacuum pumps, which may be relatively widely available and inexpensive, because the work required to reach the threshold vacuum level for the vacuum process in central vacuum chamber 110E may be shared across multiple vacuum pumps 112A-112E.

Vacuum system 111 includes second set of vacuum chambers 110F-110I. Vacuum chambers 110F-110I may be configured to step up (e.g., increase) a pressure from the operating pressure for a vacuum processing operation inside central vacuum chamber 110E (e.g., about 500 millitorr) to the atmospheric pressure (e.g., about 760 torr) outside of vacuum system 111, in a manner similar to and opposite the operation of first set of vacuum chambers 110A-110D. For example, vacuum chamber 110F may be configured to operate at about 1 torr, vacuum chamber 110G may be configured to operate at about 10 torr, vacuum chamber 110H may be configured to operate at about 25 torr, and vacuum chamber 110I may be configured to operate at about 50 torr. Absent second set of vacuum chambers 110F-110I, the external atmosphere beyond vacuum system 111 may leak directly into central vacuum chamber 110E, which would prevent central chamber 110E from reaching the threshold vacuum level for vacuum processing.

In some examples, central vacuum chamber 110E may include an objective chamber 114. Objective chamber 114 may, in some examples, be a retort configured to be placed in a vacuum furnace, and central vacuum chamber 110E may be a vacuum furnace configured to house objective chamber 114. Alternatively, vacuum chamber 110E may be configured to serve the dual purpose of acting as an objective chamber. In other words, objective chamber 114 need not be a separate component of vacuum system 111. In some examples, central vacuum chamber 110E may be configured to be a CVI and/or CVD chamber, or slurry burnout chamber, as will be further described below.

In some examples, objective chamber 114 may be configured to chemically react portion 126 of fiber tow 120 disposed within objective chamber 114 to convert carbon fiber tow 120 to reacted fiber tow 122. As such, carbon fiber tow 120 be converted within objective chamber 114, and may exit objective chamber 114 with at least part of carbon fiber tow 120 having a different chemical composition than it did when entering objective chamber 114. Thus, carbon fiber tow 120 may become reacted fiber tow 122, indicated by the color change and reference number change in FIG. 1. Since fiber system 102 may be configured to replace portion 126 with a new portion of fiber tow 120, objective chamber 114 may be configured to continuously react carbon fiber tow 120 to form reacted fiber tow 122, which may include metal carbide.

In some examples, one or more of the plurality of vacuum chambers 110 may be configured to heat carbon fiber tow 120 during a continuous vacuum process. For example, central vacuum chamber 114 may include one or more heating elements 128. Heating element(s) 128 may be include any suitable means for heating, such as an electrical element, a gas heating element, or the like. Heating element(s) 128 may be configured to heat central vacuum chamber 110E to a temperature suitable for the vacuum process, such as a temperature for chemical vapor infiltration/ chemical vapor deposition. As such, objective chamber 114 may be heated to a temperature of at least about 1400 degrees Celsius.

System 100 also includes sealing system 107. Sealing system 107 may be configured to apply a sealing material (not illustrated) to fiber tow 120. The sealing material may be configured to reduce leakage of external atmosphere into one or more vacuum chambers 110, such as central vacuum chamber. Sealing system may includes one or more deposition members 108A, 108B, 108C (collectively "deposition members 108") configured to apply a layer of sealing material to carbon fiber tow 120. For example, a layer of sealing material may be applied be deposition member 108A before fiber tow 120 enters first vacuum chamber 110A. The sealing material may assist in forming a seal between fiber tow 120 and the wall of vacuum chamber 110A as fiber tow 120 passes through inlet 117. The sealing material may include any material or mixture of materials that assists in reducing leakage of the external environment into vacuum chamber 110A. For example, water, lubricants such as vacuum grease, or other sealants may be applied to carbon fiber tow 120 by deposition member 108A. Deposition members 108 may apply the sealant via a spray, such as by one or more spray nozzles. Additionally, or alternatively, deposition members may include a brush system or a bath system configured to apply a layer of sealant material.

In some examples, the applied layer sealing material may evaporate in the reduced pressure environment inside vacuum chamber 110A. Accordingly, sealing system may include additional deposition member 108B, 108C configured to apply or additional layers of sealing material. For example, each of vacuum chambers 110 may include a corresponding deposition member 108 configured to apply a layer of sealing material configured to reduce leakage into the next vacuum chamber in the sequence.

In some examples, system 100 may include a metal application system. In the illustrated example of FIG. 1, sealing system 107 is configured to act as the metal application system, but a separate metal application system may be included in some examples. In the illustrated example of FIG. 1, deposition member 108A and/or deposition member 108B may be configured to apply a metal slurry to fiber tow 120. The metal slurry may be configured to act as a sealing layer surrounding from deposition member 108A to objective chamber 114, which may be at a low enough pressure and high enough pressure to vaporize the metal slurry for vapor deposition and/or infiltration of portion 126 of carbon fiber tow 120 disposed within objective chamber 114. Deposition member 108C may then apply a sealing material such as vacuum grease or sealing through second set of vacuum chambers 110F-110I. In some examples, the sealing material may be a metal slurry configured to react (e.g., chemically react) with carbon fiber tow 120 to generate reacted fiber tow 122, which may include or consist of metal carbide.

In some examples, the metal application system may include deposition member 108B, which may be disposed within objective chamber 114. In some examples, deposition member 108B may be configured to apply metal to carbon fiber tow 120 from a vapor. For instance, deposition member 108B may be a silicon boat or silicon ingot which is configured to vaporize in the environment of objective chamber 114 and vapor deposit on carbon fiber tow 120.

In some examples, at least one vacuum chamber 110A system 100 may include an inert gas inlet (not called out with a reference numeral for clarity) configured to receive inert gas (e.g., argon) from an inert gas supply 132. Outfitting first vacuum chamber 110A with an inert gas, in some examples, may advantageously assist in vacuum processing fiber tow 120, because leakage into successive vacuum chambers 110 may be of the inert gas that does not interfere with the vacuum process as much as gases from the external atmosphere.

In some examples, system 100 may also include controller 116. Controller 116 may include, for example, a computing device, a desktop computer, a laptop computer, a workstation, a server, a mainframe, a cloud computing system, a tablet, a smart phone, or the like. Controller 116 may be configured to control operation of system 100, including, for example, the power supplied to fiber system 102, vacuum system 111, and/or sealing system 107. As such, the speed of fiber tow 120 and thus the dwell time of fiber tow 120 in vacuum system 111 may be selectively configured for desired vacuum processing. Controller 116may be communicatively coupled to the various component of system 100 including, e.g., starter core 104, vacuum pump 112A, deposition member 108A, and/or the like using respective communication connections. Only a portion of these connections may be illustrated in FIG. 1 for clarity. In some examples, the communication connections may include network links, such as Ethernet, ATM, or other network connections. Such connections may be wireless and/or wired connections. In other examples, the communication connections may include other types of device connections, such as USB, IEEE 1394, or the like. In some examples, controller 116 may include control circuitry, such as one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry.

Carbon fiber tow 120 may be any suitable fiber tow suitable for vacuum processing. In some examples, carbon fiber tow 120 may be a bundle of individual fibers linearly aligned. As such, fiber 120 may include a plurality of continuous filaments. Each tow may include about 10 to about 10,000 individual fibers unidirectionally aligned to form a single tow. The individual fibers in the tow may define an individual fiber diameter. In some examples, the individual fiber diameter may be in a range of from about 0.1 micrometers to about 100 micrometers. In some examples, carbon fiber tow 120 may include carbon or may consist essentially of carbon. For example, some or all of the individual fibers in fiber tow 120 may include carbon. Carbon fiber tows may be made using any suitable technique. Additionally, or alternatively, the individual fibers in fiber tow 120 may include other materials, which may be coated or reacted with any suitable coating or reaction material, such as a metal, an oxide, a nitride, or the like.

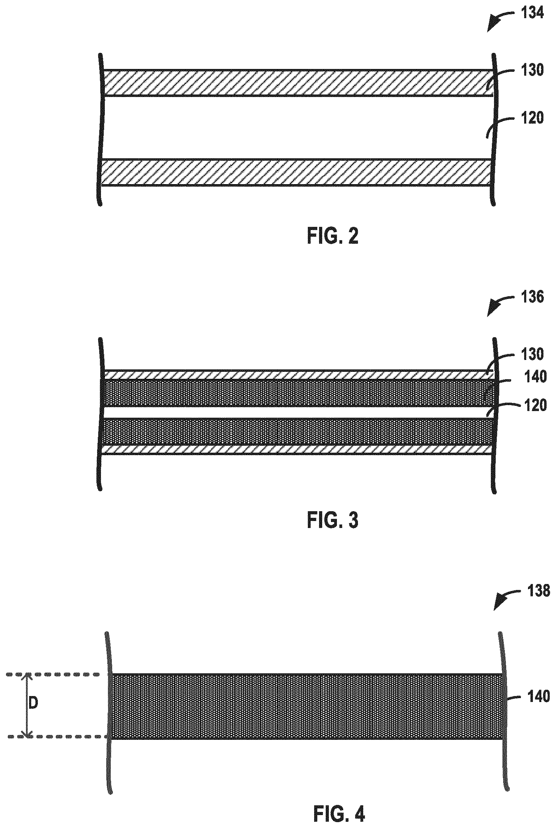

In some examples, one or more deposition members 108A, 108B of sealant system 107 may be configured to apply a metal slurry. In such examples, system 100 may be configured to generate a fiber tow comprising a metal carbide, because the metal slurry may infiltrate and react with carbon of carbon fiber tow 120. FIGS. 2-4 illustrate portions of fiber tow 120 at various points throughout the process of conversion of carbon fiber tow 120 from a carbon fiber tow to a fiber tow comprising metal carbide. FIGS. 2-4 illustrate portions of carbon fiber tow 120 within windows 134, 136, and 138 of FIG. 1, respectively.

FIG. 2 is a schematic cross-sectional diagram illustrating the portion of carbon fiber tow 120 within window 134 of FIG. 1. Carbon fiber tow 120 is covered in layer 130 of sealant material, which in this example is a metal slurry, such as silicon slurry. The slurry may include a metal (e.g., silicon) and one or more carriers configured to maintain the proximity of the metal and the surface of fiber tow 120. It should be understood that system 100 may be used to generate fiber tows comprising or consisting of metal carbide even where only deposition member 108B is configured to apply a layer of metal to fiber tow 120 in vapor form.

Prior to reaction with a metal, carbon fiber tow 120 may include a surface portion (e.g., outer-most 10-25 microns) that includes carbon filaments capable of reacting with the metal to form a metal carbide. Without being limited to any particular theory, the carbon filaments of the surface portion may have a particular composition and/or morphology, such as microstructure, phase composition, geometry of component phases, morphology of components phases, and/or dimensions and distribution of ceramic fibers or pores, crystal structure, presence and type of impurities, particle morphology shape and size, crystal surface terminations (e.g., active facets), crystal defects, and/or surface functionalization. This particular composition and/or morphology may result in a reaction with the metal according to particular reaction thermodynamics and kinetics, such as a temperature of reaction and a rate of reaction.

Turning to FIG. 3, the portion of fiber tow 120 within window 136, which is located within objective chamber 114, as illustrated. In objective chamber 114, the metal the metal of the metal slurry of layer 130 may react with carbon of carbon of carbon fiber tow 120 to form metal carbide 140. The environment inside objective chamber 114 may be at a low enough pressure and high enough temperature such that the metal may melt and/or vaporize. Objective chamber 114 may maintain a vapor pressure of the metal at the surface of carbon fiber tow 120 in stoichiometric excess. A variety of parameters, such as a temperature, a concentration (e.g., as indicated by pressure) of the metal near carbon fiber tow 120, and a dwell time within objective chamber 114, may be controlled to encourage migration of the metal into, and reaction with, carbon of carbon fiber tow 120. In the illustrated example, the metal is silicon. As such, the temperature of objective chamber 114 may be maintained at greater than about 1400°C, the pressure may be maintained at less than about 500 millitorr, and the dwell time of any individual portion of fiber tow 120 within objective chamber 114 may be between on the order of seconds to minutes.

In some instances, this reaction may be limited by diffusion of the metal into fiber tow 120. As the metal reacts with the individual fibers of carbon fiber tow 120, the newly formed metal carbide may form a diffusion barrier separating the reactants (e.g., carbon and metal), which may stop the thickening and further creation to form thicker metal carbides (e.g., by preventing metal from further penetrating into a depth of the surface portion of carbon fiber tow 120 and/or preventing diffusion of carbon out of carbon fiber tow 120 to react with the metal).

FIG. 4 is a schematic cross-sectional diagram illustrating the example portion of carbon fiber tow 120 within window 138 of FIG. 1. In this example, after carbon fiber tow 120 has exited objective chamber 114 of central vacuum chamber 110E, carbon fiber tow 120 has been converted to reacted fiber tow 122. In the illustrated example of FIG. 4, a diameter of the fiber tow may correspond to a size for which the metal may infiltrate and react (e.g., less than a diffusion limit), such as less than about 50 micrometers (µm), or between about 10 µm and about 50 µm. Where the diameter of the fiber tow is less than the diffusion limit, carbon fiber tow 120 may be completely converted to reacted fiber tow 122, which may consist of or consist essentially of metal carbide 140. In some examples, any remaining metal or carrier on fiber tow 120 may be removed, such as through evaporation. The resulting reacted fiber tow 122 may be a relatively homogeneous metal carbide having a relatively uniform thickness.

As such, system 100 may be configured to generate a reacted fiber tow 122 comprising a metal carbide. Reacted fiber tow 122 may be stable at temperatures of up to about 3600°F (about 2000°C). In this context, "stable" may mean that reacted fiber tow 122 does not degrade into its constituent elements, does not react with carbon, and/or does not react with other elements or compounds present in the environment in reacted fiber tow 122 is eventually used, for example in aerospace applications.

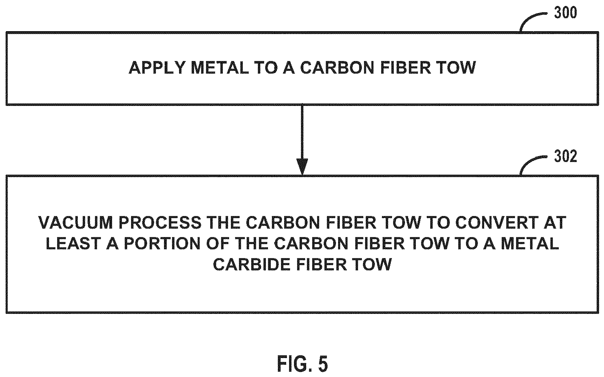

FIG. 5 is a flowchart illustrating an example technique for generating a fiber tow which includes metal carbide. Although described with respect to system 100 of FIG. 1, the illustrated technique may be performed by other systems, and system 100 may be used to perform other techniques.

The technique of FIG. 5 includes applying metal to carbon fiber tow 120 (200). The metal may be applied via sealant system 107 as part of sealant material layer 130, or may be applied separately by a separate metal application system. In some examples, the metal may be silicon, and applying silicon to carbon fiber tow 120 may include depositing silicon on carbon fiber tow 120 from a vapor. In other examples applying metal to carbon fiber tow 120 includes applying a layer 130 which includes a metal slurry (e.g., silicon slurry) onto carbon fiber tow 120.

The technique of FIG. 5 also includes vacuum processing carbon fiber tow 120 to convert at least a part of portion 126 of carbon fiber tow 120 to metal carbide. Although silicon is specifically mentioned above, in some examples the metal may be silicon, titanium, tungsten, combinations thereof, or other metals.

In some examples, the technique of FIG. 5 also includes heating carbon fiber tow 120 via one or more heating elements 128. Heating the carbon fiber tow may include raising the temperature of carbon fiber tow 120 to a temperature of at least about 1400 degrees Celsius.

In some examples, the technique of FIG. 5 may include continuously vacuum processing carbon fiber tow 120 by passing carbon fiber tow 120 through a plurality of vacuum chambers 110. In some examples, vacuum chambers 110 may be arranged in series. The technique of FIG. 5 may include passing carbon fiber tow 120 through central vacuum chamber 110E, which may be operated at the lowest pressure of vacuum chambers 110. Central vacuum chamber 110E may include objective chamber 114, which may be separate from (e.g., inside) or the same as central vacuum chamber 110E. Converting at least a portion of carbon fiber tow 120 to a reacted fiber tow 122 may occur in objective chamber 114.

In some examples, carbon fiber tow 120 may be completely converted into a silicon carbide reacted fiber tow 122, as shown in FIG. 4. Carbon fiber tow 120 may include from about 10 to about 10,000 individual carbon fibers. Carbon fiber tow 120 includes a cross-sectional fiber diameter of from about 10 micrometers to about 50 micrometers.

### EXPERIMENTAL METHODS

In a first example, a carbon fiber tow was vacuum processed using techniques according to the present disclosure to generate a silicon carbide fiber tow. A carbon fiber tow was coated with a layer of silicon slurry and placed in a vacuum chamber. The vacuum chamber was heated by a heating element to about 1400 degrees Celsius and operated a pressure of about 500 millitorr. In the objective chamber, the carbon fiber was completely converted to a silicon carbide fiber. The dwell time was on the order of 30 minutes, however it is expected that complete conversion of the carbon fiber tow to metal carbide could be completed within about 5 minutes, or about 10 minutes.

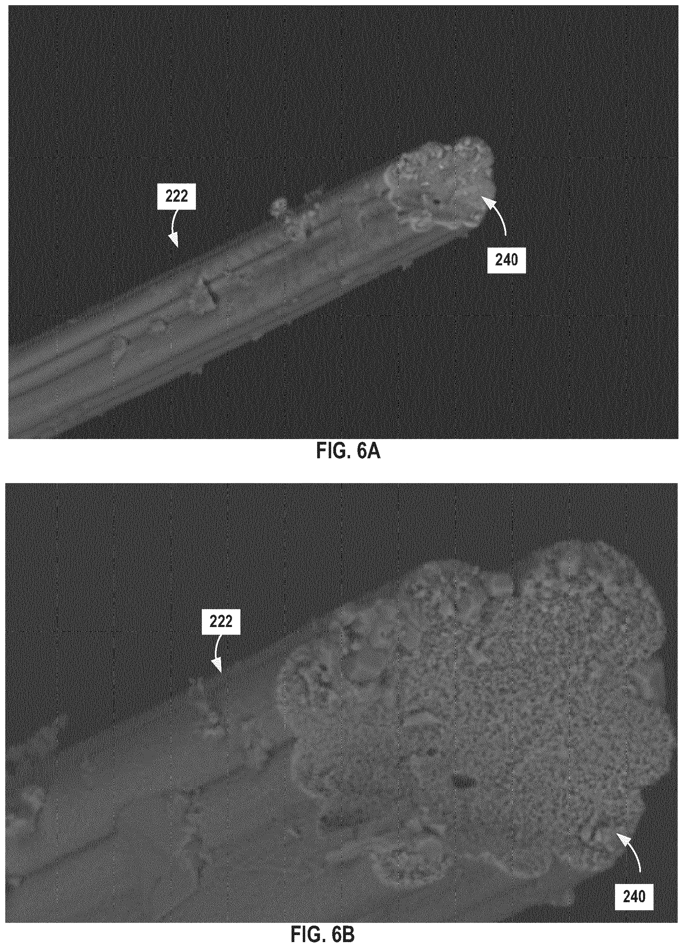

FIGS. 6A and 6B are micrographs illustrating a portion of reacted fiber tow 222, generated with a vacuum process according to the present disclosure. FIG. 6B is a closeup of the same reacted fiber tow illustrated in FIG. 6A. The illustrated reacted fiber tow 222 began as a carbon fiber tow, but was treated under vacuum as described herein. The carbon fiber tow was completely converted to silicon carbide 240.

Various examples have been described. These and other examples are within the scope of the following clauses and claims:
Clause 1. A method comprising: generating a fiber tow comprising metal carbide, wherein generating the fiber tow comprising metal carbide includes: applying metal to a carbon fiber tow, and vacuum processing the carbon fiber tow to convert at least a portion of the carbon fiber tow to metal carbide.
Clause 2. The method of clause 1, wherein the metal carbide is silicon carbide.
Clause 3. The method of clause 1, wherein vacuum processing the carbon fiber tow further comprises heating the carbon fiber tow.
Clause 4. The method of clause 3, wherein heating the carbon fiber tow further comprises heating the carbon fiber tow to a temperature of at least about 1400 degrees Celsius.
Clause 5. The method of clause 1, wherein vacuum processing the carbon fiber tow comprises continuously vacuum processing the carbon fiber tow by passing the carbon fiber tow through a plurality of vacuum chambers.
Clause 6. The method of clause 5, wherein the plurality of vacuum chambers are arranged in series, and wherein passing the carbon fiber tow through the plurality of vacuum chambers comprises passing the carbon fiber tow through a central vacuum chamber which is at the lowest pressure of the plurality of vacuum chambers.
Clause 7. The method of clause 6, wherein the central vacuum chamber is a objective chamber, and wherein converting at least a portion of the carbon fiber tow to a metal carbide fiber tow occurs in the objective chamber.
Clause 8. The method of any of clauses 1-7, wherein vacuum processing the carbon fiber tow completely converting the carbon fiber tow into a silicon carbide fiber tow.
Clause 9. The method of any of clauses 1-8, wherein applying silicon to the carbon fiber tow comprises applying a layer of silicon slurry onto the carbon fiber tow.
Clause 10. The method of any of clauses 1-9, wherein applying silicon to the carbon fiber tow comprises depositing silicon on the carbon fiber tow from a vapor.
Clause 11. The method of any of clauses 1-10, wherein the carbon fiber tow comprises about 10 to about 10,000 individual carbon fibers.
Clause 12. The method of any of clauses 1-11, wherein the carbon fiber tow comprises a cross-sectional fiber diameter of from about 10 micrometers to about 50 micrometers.
Clause 13. A system for generating a fiber tow comprising metal carbide, the system comprising: a metal application system configured to apply metal to a carbon fiber tow; and a vacuum processing system configured to convert at least a portion of a carbon fiber tow to metal carbide.
Clause 14. The system of clause 13, wherein the metal carbide is silicon carbide.
Clause 15. The system of clause 13, further comprising a heating element configured to heat the carbon fiber tow.
Clause 16. The system of clause 15, wherein the heating element is configured to heat the carbon fiber tow to a temperature of at least about 1400 degrees Celsius.
Clause 17. The system of clause 13-16, wherein the vacuum processing system includes a plurality of vacuum chambers configured to continuously vacuum process the carbon fiber tow by passing the carbon fiber tow through the plurality of vacuum chambers.
Clause 18. The system of clause 17, wherein the plurality of vacuum chambers are arranged in series, and the plurality of vacuum chambers are configured to pass the carbon fiber tow through a central vacuum chamber which is at the lowest pressure of the plurality of vacuum chambers.
Clause 19. The system of clause 18, wherein the central vacuum chamber is a objective chamber, and wherein the objective chamber is configured to convert at least a portion of the carbon fiber tow to a metal carbide fiber tow.
Clause 20. The system of any of clauses 13-19, wherein the metal application system comprises a slurry bath system of brush system configured to apply a layer of metal slurry onto the carbon fiber tow.
Clause 21. The system of any of clauses 13-20, wherein the metal application system is configured to depositing silicon on the carbon fiber tow from a vapor.
Clause 22. The system of any of clauses 13-21, further comprising the carbon fiber tow, wherein the carbon fiber tow comprises about 10 to about 10,000 individual carbon fibers.
Clause 23. The system of any of clauses 13-22, further comprising the carbon fiber tow, wherein the carbon fiber tow comprises a cross-sectional fiber diameter of from about 10 micrometers to about 50 micrometers.

## Claims

1. A system for generating a fiber tow comprising metal carbide, the system comprising:
a metal application system configured to apply metal to a carbon fiber tow; and
a vacuum processing system configured to convert at least a portion of a carbon fiber tow to metal carbide.

2. The system of claim 1, wherein the metal carbide is silicon carbide.

3. The system of any of claim 1 or claim 2, further comprising a heating element configured to heat the carbon fiber tow.

4. The system of claim 3, wherein the heating element is configured to heat the carbon fiber tow to a temperature of at least about 1400 degrees Celsius.

5. The system of any of claims 1-4, wherein the vacuum processing system includes a plurality of vacuum chambers configured to continuously vacuum process the carbon fiber tow by passing the carbon fiber tow through the plurality of vacuum chambers.

6. The system of claim 5, wherein the plurality of vacuum chambers are arranged in series, and
the plurality of vacuum chambers are configured to pass the carbon fiber tow through a central vacuum chamber which is at the lowest pressure of the plurality of vacuum chambers.

7. The system of claim 6, wherein the central vacuum chamber is an objective chamber, and wherein the objective chamber is configured to convert at least a portion of the carbon fiber tow to a metal carbide fiber tow.

8. The system of any of claims 1-7, wherein the metal application system comprises a slurry bath system of brush system configured to apply a layer of metal slurry onto the carbon fiber tow.

9. The system of any of claims 1-8, wherein the metal application system is configured to deposit silicon on the carbon fiber tow from a vapor.

10. The system of any of claims 1-9, further comprising the carbon fiber tow, wherein the carbon fiber tow comprises about 10 to about 10,000 individual carbon fibers.

11. The system of any of claims 1-10, further comprising the carbon fiber tow, wherein the carbon fiber tow comprises a cross-sectional fiber diameter of from about 10 micrometers to about 50 micrometers.

12. A method comprising:
generating a fiber tow comprising metal carbide, wherein generating the fiber tow comprising metal carbide includes:
applying metal to a carbon fiber tow, and
vacuum processing the carbon fiber tow to convert at least a portion of the carbon fiber tow to metal carbide.

13. The method of claim 12, wherein the metal carbide is silicon carbide.

14. The method of claim 12 or claim 13, wherein vacuum processing the carbon fiber tow further comprises heating the carbon fiber tow.

15. The method of claim 14, wherein heating the carbon fiber tow further comprises heating the carbon fiber tow to a temperature of at least about 1400 degrees Celsius.
